Europäisches Patentamt

European Patent Office

Office européen des brevets

(19)

(11) Veröffentlichungsnummer: **0 029 585**
**B1**

(12) **EUROPÄISCHE PATENTSCHRIFT**

(45) Veröffentlichungstag der Patentschrift:
20.07.83

(51) Int. Cl.³: **H 04 J 3/00,** H 04 Q 11/04

(21) Anmeldenummer: **80107201.8**

(22) Anmeldetag: **19.11.80**

(54) Verfahren zur Taktanpassung für ein digitales Tonsignal an einen Datenfluss.

(30) Priorität: **23.11.79 DE 2947227**

(43) Veröffentlichungstag der Anmeldung:
**03.06.81 Patentblatt 81/22**

(45) Bekanntmachung des Hinweises auf die Patenterteilung:
**20.07.83 Patentblatt 83/29**

(84) Benannte Vertragsstaaten:
**AT BE CH FR GB IT LI LU NL SE**

(56) Entgegenhaltungen:
**DE-A-2 814 351**
**DE-A-2 826 364**

,,Elektronik'', Juni 1978, Heft 6, München, U. Assmus. W. Bartel ,,Digitale Multiplexverfahren und ihre Bedeutung für ein digitales Netz'' S. 78 bis 83.
,,Frequenz'', Bd. 32, 1978, H. 10, S. 281 bis 287.

(73) Patentinhaber: **SIEMENS AKTIENGESELLSCHAFT, Berlin und München Wittelsbacherplatz 2, D-8000 München 2 (DE)**
Patentinhaber: **AEG - TELEFUNKEN AKTIENGESELLSCHAFT, Theodor-Stern-Kai 1, D-6000 Frankfurt 70 (DE)**
Patentinhaber: **TE KA DE Felten & Guilleaume Fernmeldeanlagen GmbH, Thurn-und-Taxis-Strasse 10 Postfach 4943, D-8500 Nürnberg 1 (DE)**

(72) Erfinder: **Hessenmüller, Horst, Dipl.-Ing., Taunusstrasse 125, D-6101 Rossdorf (DE)**
Erfinder: **Bartel, Willy, Dipl.-Ing., Pupinweg 18, D-6100 Darmstadt (DE)**

(74) Vertreter: **Mehl, Ernst, Dipl.-Ing. et al, Postfach 22 01 76, D-8000 München 22 (DE)**

## Verfahren zur Taktanpassung für ein digitales Tonsignal an einen Datenfluss

Die Erfindung betrifft ein Verfahren zur Taktanpassung für ein in digitaler Form vorliegendes Tonsignal an einen in Rahmen und Überrahmen organisierten Datenfluss zur digitalen Sprachübertragung in Telefoniequalität und mit Kennzeichenbits zur Kennzeichenübertragung, dessen Takt plesiochron zum Takt des digitalen Tonsignals ist, was für die beiden Taktfrequenzen eine zueinander geringfügige Abweichung von z.B. $10^{-4}$ bis $10^{-7}$ bedeutet.

Wird die Umsetzung eines analogen Tonrundfunksignals in digitale Form, z.B. mit dem Takt einer Digitalsignalverbindung für 2-Mbit/s-Signale (DSV2, bisher PCM30) gesteuert, ist die Einfügung des entstehenden Datenstromes in den Pulsrahmen der DSV2 und die Mitbenutzung der evtl. nachfolgenden weiteren digitalen Hierarchiestufen unproblematisch. Es sind jedoch Anwendungsfälle denkbar, bei denen die Analog/Digital-Umsetzung (A/D-Umsetzung) räumlich entfernt von den Geräten der DSV2 erfolgt und aus verschiedenen Gründen die Benutzung deren Taktes nicht möglich ist. Zur A/D-Umsetzung kann dann nur ein örtlich erzeugter Takt verwendet werden, der plesiochron zum Takt der DSV2 ist. In diesen Fällen ist eine Taktanpassung erforderlich.

Zum Zusammenfassen der Datenströme mehrerer digitaler Untersysteme mit zueinander plesiochronen Takten zu einem Obersystem sind mehrere Taktanpassungsverfahren bekannt. Diese Verfahren lassen sich in solche mit und ohne Informationsverlust einteilen. Wollte man für den genannten Anwendungsfall eine Taktanpassung mit Informationsverlust in Betracht ziehen, so würde dies, um den Wortsynchronismus nicht zu verlieren, das Weglassen oder Wiederholen eines ganzen Codewortes von Zeit zu Zeit bedeuten. Untersuchungen haben ergeben, dass aus dieser Massnahme eine vom Zuhörer nicht zu akzeptierende Qualitätseinbusse des Tonsignals resultieren würde, wenn die Taktabweichung grösser als $10^{-7}$ ist.

Taktanpassungsverfahren ohne Informationsverlust bei bitweiser Taktanpassung sind aus den „Nachrichtentechnischen Fachberichten", Nr. 42, 1972, PCM-Technik, VDE-Verlag GmbH Berlin-Charlottenburg, S. 235 bis 244, und aus der Zeitschrift „Elektronik", Heft 6/1978, S. 78 bis 83, bekannt. Dabei werden an vereinbarter Stelle im Rahmen — meist eines Obersystems — Leerbits eingefügt (positive Taktanpassung) oder Informationsbits ausgeblendet (negative Taktanpassung). Dieser Vorgang muss mittels im Pulsrahmen verfügbarer Zusatzkapazität dem Empfänger mitgeteilt werden, der die sendeseitig vorgenommene Manipulation rückgängig macht und den ursprünglichen Takt wieder erzeugt. Neben den Verfahren mit positiver Taktanpassung oder negativer Taktanpassung, bei denen beim ersten Verfahren die Taktfrequenz des Untersystems niedriger und beim zweiten Verfahren die Taktfrequenz des Untersystems höher als die Taktfrequenz des zur Verfügung stehenden Datenstromes ist, gibt es nach der zeitschrift „Frequenz", 32 (1978) 10, S. 281 bis 287, eine Kombination der beiden Möglichkeiten als positiv/negativ-Taktanpassung. Hierbei können relative Taktabweichungen in positiver und in negativer Richtung verarbeitet werden.

Das durch das „Taschenbuch der Fernmeldepraxis 1979", S. 13 bis 41, bekanntgewordene Multiplexsystem ist sowohl zur digitalen Übertragung von Tonsignalen als auch zur kombinierten Übertragung von Ton- und Fernsprechsignalen im Pulsrahmen der DSV2 geeignet.

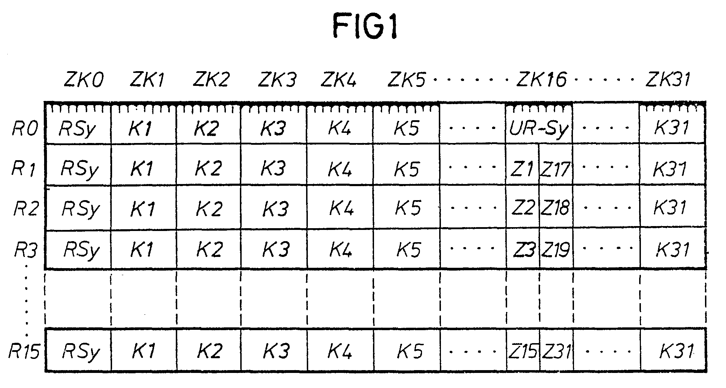

Fig. 1 zeigt den bekannten Aufbau des Pulsrahmens und des Überrahmens einer DSV2. Dieser Pulsrahmen von 125 μs Dauer enthält 256 bit; das entspricht einem Datenfluss von 2048 kbit/s. Der Pulsrahmen ist in 32 Zeitkanäle, ZK0-ZK31, unterteilt. Der erste Zeitkanal ZK0 dient alternierend zur Übertragung eines Melde- und eines Rahmenkennungswortes (RSy). Der siebzehnte Zeitkanal ZK16 ist hauptsächlich zur Übermittlung der Wahlkennzeichen Z1-Z15, Z17-Z31 der dreissig Fernsprechkanäle K1-K15, K17-K31 vorgesehen. Sechzehn nacheinander gesendete Pulsrahmen R0-R15 bilden einen Überrahmen. Die Synchronisierung des Überrahmens erfolgt durch ein Überrahmensynchronisierwort ÜR-Sy im siebzehnten Zeitkanal ZK16 des ersten Pulsrahmens R0. Der Übersichtlichkeit wegen sind die sechzehn Pulsrahmen eines Überrahmens in Fig. 1 untereinander gezeichnet.

Der aus dem Taschenbuch der Fernmeldepraxis bekanntgewordene Vorschlag erlaubt die gemischte Belegung der DSV2 mit Fernsprech- und Tonkanälen. Die ersten Zeitkanäle ZK0 und die siebzehnten Zeitkanäle ZK16 werden dabei durch die Tonübertragung nicht angetastet.

Bei dieser digitalen Tonübertragung sind Kanäle hoher Qualität mit 15 kHz Bandbreite und solche einer mittleren Qualität mit 7 kHz Bandbreite zu berücksichtigen. Im ersten Fall beträgt die Abtastfrequenz 32 kHz und im zweiten Fall 16 kHz. Beides sind Vielfache der Abtastfrequenz von 8 kHz für Fernsprechsignale. Jeder Abtastwert mit den Schutzbits gegen die auf dem Übertragungsweg entstehenden Bitfehler beansprucht ein Wort von 12 bit Länge. In einem Pulsrahmen müssen daher für einen 15-kHz-Tonkanal vier Codeworte zu je 12 bit und für einen 7-kHz-Tonkanal zwei Codeworte zu je 12 bit untergebracht werden. Bei der Übertragung eines 15-kHz-Tonkanals werden deshalb sechs Zeitkanäle ZK1-ZK3, ZK17-ZK19 zu je 8 bit und bei der Übertragung eines 7-kHz-Tonsignals drei Zeitkanäle ZK1-ZK3 belegt. Sollen weitere Tonkanäle übertragen werden, so werden weitere Zeitkanäle ZK4-ZK6, ZK20-ZK22 bzw. ZK4-ZK6 usw. belegt. Die Bis von zwei aufeinanderfolgenden Codeworten werden zusätzlich zum Schutz gegen Doppelfehler auf dem Übertragungsweg ineinander verschachtelt. Ein 15-kHz-Tonkanal hat dadurch einen Informationsfluss von 384 kbit/s und es ist zwischen der Codier-/Decodiereinrichtung des Tonsignals und der DSV2 eine Schnittstelle mit einer Datenrate von 384 kbit/s (bei 7-kHz-Tonkanal: 192 kbit/s) vorgesehen.

Das bekannte Verfahren hat den Nachteil, dass es nur eine synchrone Einfügung der Information codierter Tonkanäle in den Rahmen einer DSV2 vorsieht. Dies ist jedoch nicht immer möglich, wie z.B.:

— an einer digitalen Schnittstelle zwischen einem Rundfunkstudio und dem digitalen Netz der Postverwaltung, wenn die Takte eine zulässige Abweichung von $> 10^{-7}$ voneinander haben,

— in nationalen digitalen Netzen an den Schnittstellen zwischen Teilen dieser Netze, die nicht oder noch nicht synchron betrieben werden, wobei die Taktabweichung $> 10^{-7}$ ist, und

— beim Austausch digitaler Tonsignale zwischen internationalen Netzen, die zwar in sich synchron, gegeneinander jedoch plesiochron mit einer Taktabweichung $> 10^{-7}$ sind.

Der Erfindung liegt die Aufgabe zugrunde, ein Verfahren zur Taktanpassung anzugeben, bei dem der Beginn der ersten Codeworte der digitalen Tonsignale innerhalb eines Pulsrahmens weitgehend mit dem Beginn des ersten, zur Tonübertragung zugeteilten Zeitkanals übereinstimmt, d.h. das erste Bit der digitalen Tonsignale innerhalb eines Überrahmens fast immer das höchstbewertete Bit des Codewortes ist.

Diese Aufgabe ist durch die im Hauptanspruch gekennzeichnete Erfindung gelöst.

Der Unteranspruch betrifft eine vorteilhafte Weiterbildung der Erfindung.

Die Erfindung bietet den Vorteil, dass ein zur Übertragung synchron codierter Tonkanäle vorgesehenes Multiplexsystem ohne Veränderung des Rahmenaufbaus auch bei plesiochroner Betriebsweise der beteiligten Taktgeneratoren verwendet werden kann. Die Taktanpassung gemäss der Erfindung ermöglicht es, die Grenzen der Codeworte des digitalen Tonsignals im Pulsrahmen weitgehend unverändert zu lassen und dadurch bei Übertragungsfehlern eine schnelle empfangsseitige Synchronisierung durchzuführen.

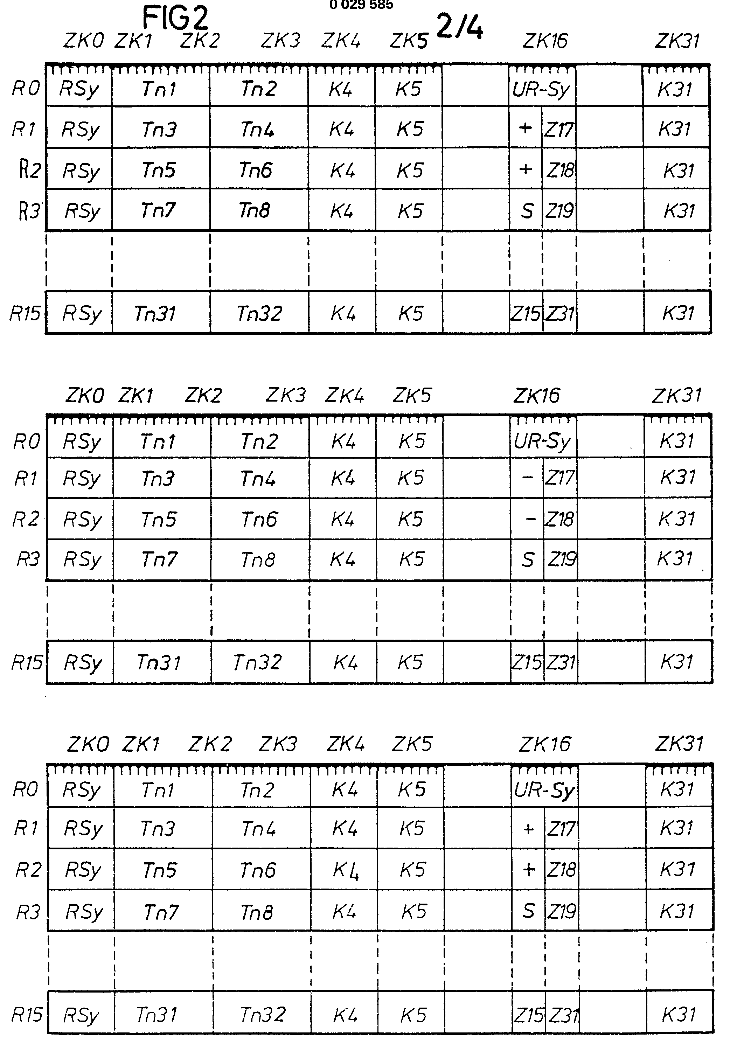

Ein weiterer Vorteil wird dadurch erzielt, dass innerhalb eines an sich plesiochron betriebenen Übertragungsnetzes Teile eines synchronen Netzes für digitale Tonsignalübertragung mit einer Bitrate von z.B. 192 kbit/s oder deren Vielfachem realisierbar sind, wodurch eine Vermittelbarkeit oder Durchschaltbarkeit im Zeitvielfach ermöglicht wird. Die Erfindung wird anhand von Fig. 2 bis 4 näher erläutert.

Fig. 2 zeigt den Aufbau des Datenflusses eines DSV2 bei einer plesiochronen 7-kHz-Tonsignalübertragung im synchronen Zustand,

Fig. 3 zeigt einen möglichen Aufbau des Datenflusses bei einer positiven, und

Fig. 4 bei einer negativen Taktanpassung des digitalen 7-kHz-Tonsignales.

In Fig. 2 bis 4 sind jeweils drei zeitlich aufeinander folgende Überrahmen untereinander gezeichnet, die jeweils aus sechzehn Pulsrahmen R0-R15 bestehen, die wiederum aus zweiunddreissig Zeitkanälen ZK0-ZK31 zu je 8 bit aufgebaut sind.

In Fig. 2 sind in jedem Überrahmen beispielsweise die Zeitkanäle ZK1-ZK3 mit zweiunddreissig Tonsignalwörtern oder Codeworten Tn1-Tn32 zu je 12 bit eines 7-kHz-Tonsignals belegt. Durch die Belegung dieser drei Zeitkanäle ZK1-ZK3 mit dem codierten Tonsignal können die in den Zeitkanälen ZK16 freigewordenen 3 mal 4 Bitstellen (ursprünglich die Wahlkennzeichen Z1-Z3 zu je 4 bit in den Pulsrahmen R1, R2 und R3) zur Taktanpassung verwendet werden. Die ersten 8 bit in den Pulsrahmen R1 und R2 werden abwechselnd pro Überrahmen mit einem positiven und einem negativen Taktanpassungssignal ++ bzw. —— beaufschlagt. Das Taktanpassungssignal ++ bzw. —— verteilt sich also auf die Pulsrahmen R1 und R2. Die restlichen 4 Bitstellen im Pulsrahmen R3 beansprucht ein Signalwort S, das beispielsweise zur Übertragung von Alarmen oder für Signalisierungszwecke verwendet werden kann.

Der synchrone Zustand „keine Taktanpassung notwendig" muss nicht gesondert übertragen werden, da die regelmässige Folge ++ —— ++ —— usw. der abwechselnd positiven und negativen Taktanpassungssignale im Empfänger keine Reaktion auslöst.

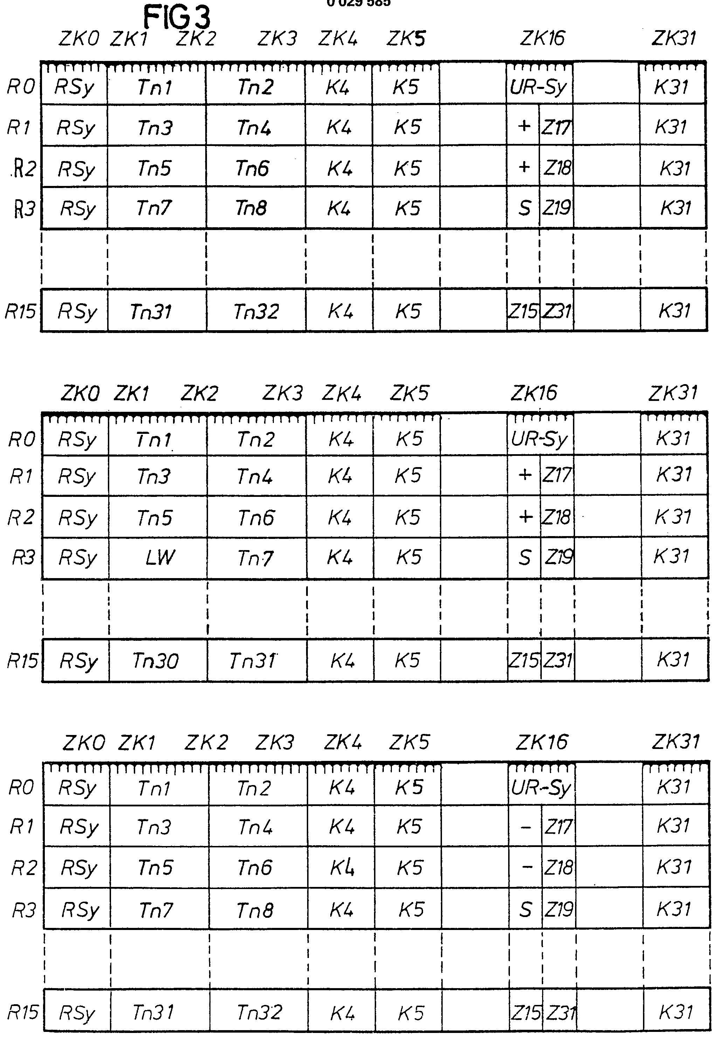

In Fig. 3 ist der Fall einer positiven Taktabweichung dargestellt, d.h. die Taktfrequenz des Tonsignals ist niedriger als die anteilige Taktfrequenz der DSV2. Wird die zeitliche Verschiebung beider Takte 12 Taktperioden, so werden erfindungsgemäss in zwei aufeinanderfolgenden Überrahmen positive Taktanpassungssignale übertragen und im zweiten Überrahmen, an einer mit dem Empfänger vereinbarten Stelle, hier des ersten Codewortes nach dem Rahmenkennungswort RSy im Pulsrahmen R3, wird ein informationsloses Leerwort LW eingefügt. Im Pulsrahmen R3 wird dadurch nur ein Codewort des 7-kHz-Tonsignals übertragen und innerhalb dieses Überrahmens erniedrigt sich die Zahl der übertragenen Codeworte um 1 auf 31. Die Synchronität ist dadurch wieder gegeben, und es werden in den darauf folgenden Überrahmen abwechselnd und mit dem negativen Taktanpassungssignal beginnend positive und negative Taktanpassungssignale übertragen.

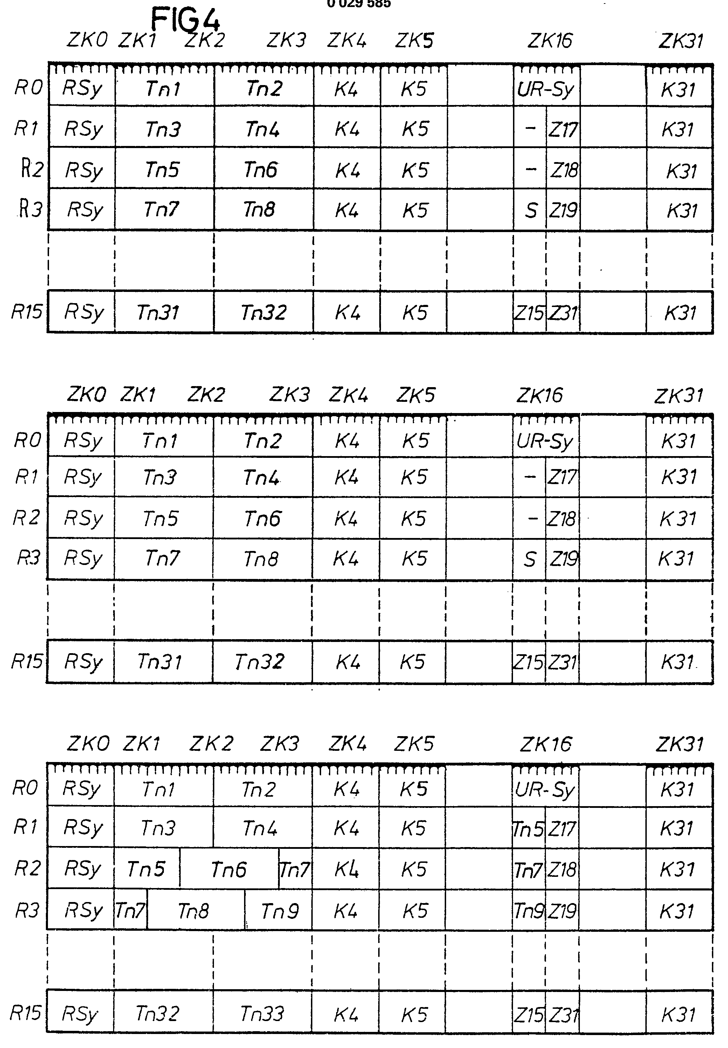

Bei der in Fig. 4 dargestellten negativen Taktabweichung ist die Taktfrequenz des Tonsignals grösser als die anteilige Taktfrequenz der DSV2. Um diesen Zustand zu signalisieren, werden in zwei aufeinanderfolgenden Überrahmen negative Taktanpassungssignale übertragen. Da ein aus dem Tonsignal ausgeblendetes Codewort zusätzlich innerhalb eines Überrahmens übertragen werden muss, ist vereinbart, dass der dem Überrahmen mit dem zweiten negativen Taktanpassungssignal folgende Überrahmen (hier der dritte Überrahmen) 33 Codeworte enthält. Die sonst bei einer Tonübertragung für Taktanpassungssignal und Signalwort S genutzten Bitstellen innerhalb des siebzehnten Zeitkanals ZK16 werden im Pulsrahmen R1 mit den ersten 4 Bits des Codewortes Tn5, im Pulsrahmen R2 mit den 5. bis 8. Bits des Codewortes Tn7 und im Pulsrahmen R3 mit den letzten 4 Bits des Codewortes Tn9 belegt. Eine dadurch bedingte Verschiebung der Codewortgrenzen der Codeworte Tn5 bis Tn9 innerhalb der Pulsrahmen R2 und R3 hebt sich im nicht dargestellten fünften Pulsrahmen auf und ein zehntes Codewort beginnt auf der ersten Bitstelle des Zeitkanals ZK1 in diesem Pulsrahmen.

Auch hier werden nach der Taktanpassung abwechselnd positive und negative (mit positiven beginnend) Taktanpassungssignale in den darauf folgenden Überrahmen übertragen.

Es besteht auch die Möglichkeit, bei der positiven Taktanpassung 3 mal 4 Leerbits zwischen die Codeworte innerhalb eines Überrahmens einzufügen (z.B. in drei hintereinander folgende Pulsrahmen je 4 Leerbits), um dadurch eine weniger sprunghafte Taktanpassung als bei dem Einfügen eines 12-bit-Leerwortes zu erreichen.

Desgleichen besteht die Möglichkeit bei der negativen Taktanpassung ein in 3 mal 4 Bits zerlegtes sendeseitig ausgeblendetes Codewort innerhalb des zeitkanals ZK16 zu übertragen und dieses Codewort erst nach der vollständigen Übertragung als Ganzes empfangsseitig an verabredeter Stelle in das digitale Tonsignal einzufügen. Eine Verschiebung der Codewortgrenzen innerhalb der Pulsrahmen findet dabei nicht statt.

Geht man davon aus, dass eine relative Taktabweichung von beispielsweise $5 \cdot 10^{-5}$ auftritt, so muss im ungünstigsten Fall eine Taktanpassung nur alle 0,316 s erfolgen ($\hat{=}$ einem Abstand von 157 Überrahmen) und bei negativer Taktanpassung die Übertragung des Signalwortes S nur alle 157 Überrahmen unterbrochen werden.

Bei einer weiteren Möglichkeit der negativen Taktanpassung wird auf die Übertragung des sendeseitig ausgeblendeten Codewortes des digitalen Tonsignals verzichtet und nur durch die zwei aufeinanderfolgenden negativen Taktanpassungssignale der Zeitpunkt der Taktanpassung dem Empfänger mitgeteilt. Dieser ersetzt das ausgeblendete Codewort durch einen Schätzwert, der entweder gleich dem vorhergegangenen Codewort ist, eine Extrapolation zweier oder mehrerer vorheriger Codeworte ist oder der Mittelwert (geometrischer, arithmetischer usw.) der dem ausgeblendeten Codewort benachbarten Codeworte ist. In diesem Fall erfolgt keine Übertragungsunterbrechung des Signalwortes S.

Bei Übertragung eines 15-kHz-Tonsignals beispielsweise in den sechs zeitkanälen ZK1, ZK2, ZK3, ZK17, ZK18 und ZK19 sind zusätzlich 12 Bits an den Stellen der Wahlkennzeichen Z17-Z19 frei. Diese können zusätzlich zum Signalwort S andere Aufgaben, wie z.B. die Übertragung von Fernsteuersignalen, übernehmen.

Eine negative Taktanpassung des 15-kHz-Tonsignals gemäss dem Beispiel nach Fig. 4 verursacht auch eine Verschiebung der Codewortgrenzen innerhalb der Zeitkanäle ZK17-ZK19, da im Pulsrahmen R1 4 Bits des normalerweise im Zeitkanal ZK17 und in der ersten Hälfte des Zeitkanals ZK18 zu übertragenden Codewortes bereits im Zeitkanal ZK16 übertragen werden. Diese Codewortverschiebung vergrössert sich im Pulsrahmen R2 nach dem Zeitkanal ZK16 auf 8 Bits und wird im Pulsrahmen R3 nach dem Zeitkanal ZK16 12 bit, so dass der Beginn des Codewortes in den Zeitkanälen ZK17 und ZK18 mit dem Beginn des Zeitkanals ZK17 übereinstimmt.

Die Taktanpassungssignale + + bzw. − − sind im Ausführungsbeispiel 8stellige Codeworte, die zueinander komplementär sind. Ihre Hammingdistanz ist somit 8. Daher lassen sich bis zu drei in diesen Codeworten enthaltene Fehler korrigieren.

Schaltungstechnisch lässt sich das Verfahren gemäss der Erfindung mit bekannten veränderbaren Speichern (Alinger) zum Aus- und Einblenden von Bitgruppen realisieren. Die Wiederherstellung des zum codierten Tonsignal gehörenden Originaltaktes ist mittels eines bekannten PLL-Schaltkreises mit niedriger Zeitkonstante im Regelkreis möglich.

Dieses Verfahren kann bei der Taktanpassung für alle codierten Analogsignale, insbesondere jedoch für Bild- und Tonsignale, unabhängig von der Rahmenstruktur des Übertragungssystems verwendet werden, wenn nur der Rahmen zusätzliche Informationskapazität zur Signalisierung der Taktanpassungssignale aufweist.

## Patentansprüche

1. Verfahren zur Taktanpassung für ein in digitaler Form vorliegendes Tonsignal an einen in Pulsrahmen und Überrahmen organisierten Datenfluss zur digitalen Sprachübertragung in Telefoniequalität und mit Kennzeichenbits zur Kennzeichenübertragung, dessen Takt plesiochron zum Takt des digitalen Tonsignals ist, dadurch gekennzeichnet, dass die Taktanpassung pro Überrahmen wortweise, d.h. mit einem ganzen Codewort des digitalen Tonsignals erfolgt, und dass an den bei Übertragung des digitalen Tonsignals über mehrere Fernsprechkanäle (K1, K2 und K3 in Fig. 1) freigewordenen, diesen zugeordneten Stellen (Z1, Z2 und Z3 in Fig. 1) der Kennzeichenbits (im ZK16) pro Überrahmen ein positives bzw. ein negatives Taktanpassungssignal (+ + bzw. − − in Fig. 2 bis 4 in R1 und R2) übertragen wird, dass bei einer Übereinstimmung der Takte des Datenflusses und des digitalen Tonsignals (Fig. 2) das Taktanpassungssignal (+ + bzw. − −) von Überrahmen zu Überrahmen abwechselnd positiv und negativ ist, dass bei einer positiven Taktanpassung (Fig. 3) die Taktanpassungssignale (+ +) zweier aufeinanderfolgender Überrahmen beide positiv sind und innerhalb des zweiten Überrahmens — der das zweite der direkt aufeinanderfolgenden positiven Taktanpassungssignale enthält — an vereinbarter Stelle ein Leerwort (LW) zwischen zwei Codewörter des digitalen Tonsignals (Tn6 und Tn7) eingefügt wird, und dass bei einer negativen Taktanpassung (Fig. 4) die Taktanpassungssignale (− −) zweier aufeinanderfolgender Überrahmen beide negativ sind und die freigewordenen Stellen der Kennzeichenbits in dem Überrahmen, der dem zweiten negativen Taktanpassungssignal folgt, mit einem aus dem codierten Tonsignal ausgeblendeten Codewort bzw. mit ausgeblendeten Teilen von Codewörtern (Tn5, Tn7 und Tn9 in Fig. 4) belegt werden.

2. Verfahren zur Taktanpassung nach Anspruch 1, dadurch gekennzeichnet, dass bei einer negativen Taktanpassung an vereinbarter Stelle sendeseitig ein Codewort des digitalen Tonsignals ausgeblendet und durch Schätzwertbildung, z.B. Mittelwert der benachbarten Codewörter, empfangsseitig ersetzt wird.

## Claims

1. Method for matching the clock rate of a voice frequency signal occurring in digital form to a data flow which is organised in pulse frames and superframes, serves for digital speech transmission of telephone quality and is provided with signalling bits for signalling transmission, and whose clock rate is plesiochronous to the clock rate of the digital voice frequency signal, characterised in that the clock rate matching in respect of each superframe is carried out word-wise, i.e. with one entire code word of the digital voice frequency signal, that, in respect of each superframe in those positions (Z1, Z2 and Z3 in fig. 1) of the signalling bits (ZK 16) which have become free during the transmission of the digital voice frequency signal over a plurality of telephone channels (K1, K2 and K3 in Fig. 1) and which are assigned to the latter, there is transmitted one positive or one negative clock rate matching signal (++ or -- in Fig. 2 to 4 in R1 and R2), that, in the event of the identity of the clock rates of the data flow out of the digital voice frequency signals (Fig. 2), the clock rate matching signal (++ or --) is alternately positive and negative from one superframe to the next, that, in the event of a positive clock rate matching (Fig. 3), the clock rate matching signals (++) of two consecutive superframes are both positive and within the second superframe — which contains the second of the directly consecutive positive clock rate signals — at an agreed position a blank word (LW) is inserted between two code words of the digital voice frequency signal (Tn6 and Tn7), and that, in the event of negative clock rate matching (fig. 4), the clock rate matching signals (--) of two consecutive superframes are both negative and the released positions of the signalling bits in the superframe which follows the second negative clock rate matching signal is filled with a code word gated out from the coded voice frequency signal or with gated out components of code words (Tn5, Tn7 and Tn9 in fig. 4).

2. Method for clock rate matching as claimed in claim 1, characterised in that, in the event of negative clock rate matching, at an agreed position at the transmitting side a code word of the digital voice frequency signal, is gated out and is replaced by the formation of an estimated value, for example the mean value of the adjacent code words, at the receiving end.

## Revendications

1. Procédé d'ajustement de rythme pour un signal audio existant sous forme numérique à un flux de données organisé en trames d'impulsions et supertrames, pour la transmission numérique de la parole en qualité téléphonie et comportant des bits indicateurs pour la transmission d'indicateurs, dont le rythme est plésiochrone par rapport au rythme du signal audio numérique, caractérisé par le fait que: l'ajustement de rythme de chaque supertrame est effectué mot par mot, c'est-à-dire avec un mot de code entier du signal audio numérique et que, aux emplacements (Z1, Z2 et Z3 sur la fig. 1), des bits indicateurs (dans ZK16) de chaque supertrame qui y sont associés et sont devenus libres lors de la transmission du signal audio numérique par l'intermédiaire de plusieurs canaux téléphoniques (K1, K2 et K3 sur la fig. 1) est transmis un signal d'ajustement de rythme positif ou négatif (++ ou -- sur les fig. 2 à 4 dans R1 et R2), lors d'une coïncidence des rythmes du flux de données et du signal audio numérique (fig. 2), le signal d'ajustement de rythme (++ ou --) est alternativement positif et négatif d'une supertrame à l'autre, dans le cas d'un ajustement de rythme positif (fig. 3), les signaux d'ajustement de rythme (++) de deux supertrames successives sont toua bre2-1s deux positifs et que, à l'intérieur de la seconde supertrame — qui contient le second des signaux d'ajustement de rythme positifs qui se suivent directement — à l'emplacement convenu un mot vide (LW) est inséré entre deux mots de code du signal audio numérique (Tn6 et Tn7), et dans le cas d'un ajustement de rythme négatif (fig. 4), les signaux d'ajustement de rythme (--) de deux supertrames successives sont tous deux négatifs, et les emplacements des bits indicateurs qui sont devenus libres dans la supertrame qui suit le second signal d'ajustement de rythme négatif sont occupés par un mot de code supprimé du signal audio codé ou par des parties supprimées de mots de code (Tn5, Tn7 et Tn9 sur la fig. 4).

2. Procédé pour l'ajustement de rythme suivant la revendication 1, caractérisé par le fait que, dans le cas d'un ajustement de rythme négatif, un mot de code du signal audio numérique est supprimé en un endroit convenu côté émission, et est remplacé par formation d'une valeur estimée, par exemple une valeur moyenne des mots de code voisins, côté réception.

# FIG1

|     | ZK0 | ZK1 | ZK2 | ZK3 | ZK4 | ZK5 | ·····ZK16····· | | ZK31 |
|-----|-----|-----|-----|-----|-----|-----|------|------|------|
| R0  | RSy | K1  | K2  | K3  | K4  | K5  | ····· UR-Sy | ···· | K31 |
| R1  | RSy | K1  | K2  | K3  | K4  | K5  | ···· Z1 | Z17 ···· | K31 |
| R2  | RSy | K1  | K2  | K3  | K4  | K5  | ···· Z2 | Z18 ···· | K31 |
| R3  | RSy | K1  | K2  | K3  | K4  | K5  | ···· Z3 | Z19 ···· | K31 |
| ⋮   |     |     |     |     |     |     |      |      |      |
| R15 | RSy | K1  | K2  | K3  | K4  | K5  | ···· Z15 | Z31 ···· | K31 |

## FIG 2

| | ZK0 | ZK1 | ZK2 | ZK3 | ZK4 | ZK5 | | ZK16 | | | ZK31 |
|---|---|---|---|---|---|---|---|---|---|---|---|
| R0 | RSy | Tn1 | Tn2 | K4 | K5 | | UR-Sy | | | | K31 |
| R1 | RSy | Tn3 | Tn4 | K4 | K5 | | + | Z17 | | | K31 |
| R2 | RSy | Tn5 | Tn6 | K4 | K5 | | + | Z18 | | | K31 |
| R3 | RSy | Tn7 | Tn8 | K4 | K5 | | S | Z19 | | | K31 |
| | | | | | | | | | | | |
| R15 | RSy | Tn31 | Tn32 | K4 | K5 | | Z15 | Z31 | | | K31 |

| | ZK0 | ZK1 | ZK2 | ZK3 | ZK4 | ZK5 | | ZK16 | | | ZK31 |
|---|---|---|---|---|---|---|---|---|---|---|---|
| R0 | RSy | Tn1 | Tn2 | K4 | K5 | | UR-Sy | | | | K31 |
| R1 | RSy | Tn3 | Tn4 | K4 | K5 | | − | Z17 | | | K31 |
| R2 | RSy | Tn5 | Tn6 | K4 | K5 | | − | Z18 | | | K31 |
| R3 | RSy | Tn7 | Tn8 | K4 | K5 | | S | Z19 | | | K31 |
| | | | | | | | | | | | |
| R15 | RSy | Tn31 | Tn32 | K4 | K5 | | Z15 | Z31 | | | K31 |

| | ZK0 | ZK1 | ZK2 | ZK3 | ZK4 | ZK5 | | ZK16 | | | ZK31 |
|---|---|---|---|---|---|---|---|---|---|---|---|
| R0 | RSy | Tn1 | Tn2 | K4 | K5 | | UR-Sy | | | | K31 |
| R1 | RSy | Tn3 | Tn4 | K4 | K5 | | + | Z17 | | | K31 |
| R2 | RSy | Tn5 | Tn6 | K4 | K5 | | + | Z18 | | | K31 |
| R3 | RSy | Tn7 | Tn8 | K4 | K5 | | S | Z19 | | | K31 |
| | | | | | | | | | | | |
| R15 | RSy | Tn31 | Tn32 | K4 | K5 | | Z15 | Z31 | | | K31 |

## FIG 3

| | ZK0 | ZK1 | ZK2 | ZK3 | ZK4 | ZK5 | | ZK16 | ZK17 | | ZK31 |
|---|---|---|---|---|---|---|---|---|---|---|---|
| R0 | RSy | Tn1 | Tn2 | K4 | K5 | | | UR-Sy | | | K31 |
| R1 | RSy | Tn3 | Tn4 | K4 | K5 | | | + | Z17 | | K31 |
| R2 | RSy | Tn5 | Tn6 | K4 | K5 | | | + | Z18 | | K31 |
| R3 | RSy | Tn7 | Tn8 | K4 | K5 | | | S | Z19 | | K31 |
| R15 | RSy | Tn31 | Tn32 | K4 | K5 | | | Z15 | Z31 | | K31 |

| | ZK0 | ZK1 | ZK2 | ZK3 | ZK4 | ZK5 | | ZK16 | ZK17 | | ZK31 |
|---|---|---|---|---|---|---|---|---|---|---|---|
| R0 | RSy | Tn1 | Tn2 | K4 | K5 | | | UR-Sy | | | K31 |
| R1 | RSy | Tn3 | Tn4 | K4 | K5 | | | + | Z17 | | K31 |
| R2 | RSy | Tn5 | Tn6 | K4 | K5 | | | + | Z18 | | K31 |
| R3 | RSy | LW | Tn7 | K4 | K5 | | | S | Z19 | | K31 |
| R15 | RSy | Tn30 | Tn31 | K4 | K5 | | | Z15 | Z31 | | K31 |

| | ZK0 | ZK1 | ZK2 | ZK3 | ZK4 | ZK5 | | ZK16 | ZK17 | | ZK31 |
|---|---|---|---|---|---|---|---|---|---|---|---|
| R0 | RSy | Tn1 | Tn2 | K4 | K5 | | | UR-Sy | | | K31 |
| R1 | RSy | Tn3 | Tn4 | K4 | K5 | | | – | Z17 | | K31 |
| R2 | RSy | Tn5 | Tn6 | K4 | K5 | | | – | Z18 | | K31 |
| R3 | RSy | Tn7 | Tn8 | K4 | K5 | | | S | Z19 | | K31 |
| R15 | RSy | Tn31 | Tn32 | K4 | K5 | | | Z15 | Z31 | | K31 |

# FIG 4

**Table 1**

| | ZK0 | ZK1 | ZK2 | ZK3 | ZK4 | ZK5 | | ZK16 | | ZK31 |
|---|---|---|---|---|---|---|---|---|---|---|
| R0 | RSy | Tn1 | Tn2 | K4 | K5 | | UR-Sy | | | K31 |
| R1 | RSy | Tn3 | Tn4 | K4 | K5 | | – | Z17 | | K31 |
| R2 | RSy | Tn5 | Tn6 | K4 | K5 | | – | Z18 | | K31 |
| R3 | RSy | Tn7 | Tn8 | K4 | K5 | | S | Z19 | | K31 |
| ⋮ | | | | | | | | | | |
| R15 | RSy | Tn31 | Tn32 | K4 | K5 | | Z15 | Z31 | | K31 |

**Table 2**

| | ZK0 | ZK1 | ZK2 | ZK3 | ZK4 | ZK5 | | ZK16 | | ZK31 |
|---|---|---|---|---|---|---|---|---|---|---|
| R0 | RSy | Tn1 | Tn2 | K4 | K5 | | UR-Sy | | | K31 |
| R1 | RSy | Tn3 | Tn4 | K4 | K5 | | – | Z17 | | K31 |
| R2 | RSy | Tn5 | Tn6 | K4 | K5 | | – | Z18 | | K31 |
| R3 | RSy | Tn7 | Tn8 | K4 | K5 | | S | Z19 | | K31 |
| ⋮ | | | | | | | | | | |
| R15 | RSy | Tn31 | Tn32 | K4 | K5 | | Z15 | Z31 | | K31 |

**Table 3**

| | ZK0 | ZK1 | ZK2 | ZK3 | ZK4 | ZK5 | | ZK16 | | ZK31 |
|---|---|---|---|---|---|---|---|---|---|---|
| R0 | RSy | Tn1 | Tn2 | K4 | K5 | | UR-Sy | | | K31 |
| R1 | RSy | Tn3 | Tn4 | K4 | K5 | | Tn5 | Z17 | | K31 |
| R2 | RSy | Tn5 | Tn6 | Tn7 | K4 | K5 | | Tn7 | Z18 | K31 |
| R3 | RSy | Tn7 | Tn8 | Tn9 | K4 | K5 | | Tn9 | Z19 | K31 |
| ⋮ | | | | | | | | | | |
| R15 | RSy | Tn32 | Tn33 | K4 | K5 | | Z15 | Z31 | | K31 |